# EUROPÄISCHE PATENTANMELDUNG

(11) **EP 2 014 363 A2**
(43) Veröffentlichungstag der Anmeldung: **14.01.2009**
(21) Anmeldenummer: 08009586.2
(22) Anmeldetag: 27.05.2008
(51) Int. Cl.: B01J 31/08, B01J 39/00, B01J 39/18

(54) **Verfahren zum Umfüllen von vorkonditionierten Ionenaustauscherharz-Suspensionen**

(30) Priorität: 08.06.2007 DE 102007026549
(71) Anmelder: Bayer MaterialScience AG, 51368 Leverkusen (DE)
(72) Erfinder: Alps, Ernst-Joachim, 41539 Dormagen (DE); Blaschke, Ulrich, Dr., 47829 Krefeld (DE); Münnich, Christian, Dr., 51377 Leverkusen (DE); Westernacher, Stefan, Dr., 47906 Kempen (DE)

(57) **Zusammenfassung**

Die vorliegende Erfindung betrifft ein Verfahren zur Aufbewahrung von vorbehandelten, konditionierten Ionenaustauscherharz-Suspensionen als Katalysatoren für chemische Reaktionen als auch die Lagergerung, den Transport und das Umfüllen dieser vorkonditionierten Ionenaustauscherharz-Suspension in einen Reaktor.

## Beschreibung

Die vorliegende Erfindung betrifft ein Verfahren zur Aufbewahrung von vorbehandelten, konditionierten Ionenaustauscherharz-Suspensionen als Katalysatoren für chemische Reaktionen als auch die Lagergerung, den Transport und das Umfüllen dieser vorkonditionierten Ionenaustauscherharz-Suspension in einen Reaktor.

Es ist bekannt, insbesondere saure Kationenaustauscher zur Katalyse von chemischen Reaktionen, wie z.B zur Kondensation von Ketonen oder Aldehyden mit Phenolen zu Bisphenolen zu verwenden. Kondensationsreaktionen sind literaturbekannt, wie z. B. die Synthese von Bisphenolen, die im allgemeinen durch säurekatalysierte Umsetzung von Phenolen mit Carbonylverbindungen erfolgt. Letztere Reaktion wird im allgemeinen heterogen katalysiert in Festbett- oder Wirbelbettreaktoren wie auch in Reaktivkolonnen durchgeführt. Beispielsweise werden bei der Synthese von Bisphenolen üblicherweise Katalysatoren aus vernetzten sulfonierten Polystyrolharzen (saure Ionentauscher; Kationenaustauscher) zum Einsatz gebracht. Diese Ionenaustauscher können gegebenenfalls durch kovalent oder ionisch gebundene Cokatalysatoren chemisch modifiziert sein und sind makroporös oder gelförmig wie es in US-A-4,191,843 und US-A-3,037,052 beschrieben ist.

Es ist ebenfalls bekannt, insbesondere saure Kationenaustauscher vor ihrer Verwendung als Katalysator in chemischen Reaktionen einer Vorbehandlung zu unterziehen, bei der beispielsweise eluierbare säurehaltige Bestandteile aus dem Katalysatorbett weitestgehend entfernt werden, damit sie bei der anschließenden Reaktion nicht zur Bildung von unerwünschten Nebenprodukten führen. Eine solche Vorbehandlung, die meistens auch mit einer Entwässerung des gewaschenen Ionenaustauschers verbunden ist und üblicherweise als Konditionierung bezeichnet wird, ist insbesondere für die Herstellung von Bisphenolen mit Hilfe saurer Ionenaustauscher unumgänglich und in WO-A 01/ 37992 beschrieben.

Es ist weiterhin bekannt, dass Kationenaustauscher, die vorbehandelt sind und für die Synthese von Bisphenolen eingesetzt werden, instabil sein können, wie aus der Lehre von JP-A 000006296871 und von JP-A 000006304479 zu entnehmen ist. In JP-A 000006296871 werden nun Verfahren beschrieben wie die Handhabung, das Lagern und das Transportieren des instabilen Katalysators vermieden werden kann. Die hier geschilderten Verfahren beschreiben, dass die Konditionierung in dem nachher zur Katalyse eingesetzten Reaktor stattfinden. JP-A 000006296871 beschreibt somit ein Verfahren, bei dem in dem zur Katalyse eingesetzten Reaktor vorher die Konditionierung stattfindet, so dass eine Lagerung und ein Transport des instabilen Ionenaustauschers nicht nötig ist, aber gleichzeitig, in der Zeit der Konditionierung der Reaktor für die eigentliche Katalyse nicht genutzt werden kann. Eine stationär durchzuführende Behandlung des Ionenaustauschem z.B. in einem Reaktionsapparat ist ebenfalls in EP-A 1239958 beschrieben. Die Durchführung einer Vorbehandlung/ Konditionierung von Ionenaustauschern im Reaktionsapparat hat den Nachteil, dass der Reaktionsapparat während der Konditionierung nicht für den Produktionsprozess zur Verfügung steht und die Katalysatorkonditionierung somit einen Produktionsausfall bedeutet.

Um einen so beschriebenen Produktionsausfall zu vermeiden, ist es möglich, die notwendige Konditionierung des Ionenaustauschers in einer separaten, vom eigentlichen Produktionsprozess entkoppelten, Konditionierungsapparatur durchzuführen. Dies bedeutet jedoch zusätzliche Investitionskosten, die die Wirtschaftlichkeit des Gesamtproduktionsverfahrens nachteilig beeinflussen. Dieser Effekt ist umso stärker ausgeprägt, je mehr die Konditionierungsapparatur nur teilausgelastet ist, wie es bei satzweise durchgeführten Katalysatorwechseln häufig der Fall ist.

In der WO-A 01/ 37992 wird die Vorkonditionierung einer Kationenaustauscherharz-Suspension für die Katalysatorreaktion von Aceton mit Phenol zu Bisphenol A beschrieben. WO-A 01/37992 beschreibt auch, dass diese Vorkonditionierung in einem externem, dem Reaktor vorgelagerten Behälter durchgeführt werden kann, beschreibt jedoch nicht, wie eine solch vorkonditionierte Ionenaustauscherharz-Suspension für längere Zeit gelagert oder zu anderen Produktionsstandorten transportiert und dort in den jeweiligen Reaktor überführt werden kann, ohne dass die vorkonditionierte Ionenaustauscherharz-Suspension ihre für die Katalyse wichtigen Eigenschaften verliert.

Eine solche Vorgehensweise bedeutet eine Einschränkung hinsichtlich der effizienten Disposition und Nutzung von Apparaten bzw. Anlagenteilen zur Katalysator-Vorbehandlung und - Konditionierung insbesondere für Anwender, die mehrere Produktionsanlagen betreiben, in denen ein wiederkehrender Katalysator-Austausch erforderlich ist.

Aufgabe der Erfindung war es daher, ein Verfahren bereit zu stellen, dass es ermöglicht, die vorkonditionierte Ionenaustauscherharz-Suspension über längere Zeiträume lagern und auch transportieren und anschließend in einen Reaktor umfüllen zu können ohne das der Ionenaustauscher die notwendigen Eigenschaften als Reaktionskatalysator über diese Zeit verliert. Durch ein solches Verfahren ist die vorkonditionierte Ionenaustauscherharz-Suspension vom Produktionsstandort z. B. der Bisphenolsynthese entgegen der Lehre von JP-A 000006296871 und von JP-A 000006304479 unabhängig.

Entgegen des Vorurteils durch die Lehre von JP 000006296871 und von JP 000006304479 wurde nun überraschend gefunden, dass vorbehandelte, konditionierte Kationenaustauscherharz-Suspensionen für die Bisphenol-Synthese durchaus gelagert, transportiert und anschließend in einen Reaktor umgefüllt werden können, ohne dabei ihre Aktivität und ihre Verwendbarkeit für diese Synthese zu verlieren, wenn dabei das im folgenden beschriebene erfindungsgemäße Verfahren zur Aufbewahrung von vorkonditionierten Ionenaustauscherharz-Suspensionen angewendet wird.

Diese Aufgabe wird gelöst durch ein Verfahren zur Aufbewahrung von vorbehandelten, konditionierten Ionenaustauschern als Katalysatoren für chemische Reaktionen, wobei das vorkonditionierte Ionenaustauscherharz als vorkonditionierte Ionenaustauscherharz-Suspension in einem Laber- oder Transportbehälter vorliegt und entweder zu einem Lagerplatz transportiert und dort zwischengelagert oder zu einem zu befüllenden Reaktor transportiert und in diesen überführt wird.

Vorteilhaft ist das erfindungsgemäße Verfahren, wenn der Lager- oder Transportbehälter beheizbar ist.

Vorteilhaft ist das erfindungsgemäße Verfahren, wenn die Ionenaustauscherharz-Suspension in Gegenwart von weniger als 500 Vol-ppm Sauerstoff in der Gasphase mit einem Feststoffanteil von 20 bis 80 Vol.% bezogen auf die Ionenaustauscherharz-Suspension im Lager- oder Transportbehälter vorliegt.

Vorteilhaft ist das erfindungsgemäße Verfahren, wenn die im beheizbarem Lager- oder Transportbehälter in flüssiger oder erstarrter oder teilerstarrter Form vorliegende vorkonditionierte Ionenaustauscherharz-Suspension in eine pumpfähige Ionenaustauscherharz-Suspension, falls die Suspension erstarrt oder teilerstarrt ist, durch schonendes Aufschmelzen, mit weniger als 500Vol-ppm Sauerstoff in der Gasphase, überführt wird, mit geeigneten Pumpen, die den Ionenaustauscher nicht schädigen, dem Lager- oder Transportbehälter entnommen und über geeignete Rohrleitungen oder geeignete flexible Verbindungen in einen Reaktor bei Temperaturen von 50 bis 80 °C und mit einem Feststoffanteil von 20 bis 80 Vol.-% bezogen auf die Ionenaustauscherharz-Suspension mit weniger als 500 Vol-ppm Sauerstoff in der Gasphase überführt wird.

Vorteilhaft ist das erfindungsgemäße Verfahren, wenn die flüssige Phase der vorkonditionierten Ionenaustauscherharz-Suspension eine OH-Komponente ist.

Vorteilhaft ist das erfindungsgemäße Verfahren, wenn die OH-Komponente Phenol ist.

Vorteilhaft ist das erfindungsgemäße Verfahren, wenn die OH-Komponente Phenol ist, das noch ein Restwassergehalt im Bereich von 0,1 - 10%, bevorzugt 0,2 - 5%, besonders bevorzugt 0,5 - 3% bezogen auf Phenol, enthält.

Vorteilhaft ist das erfindungsgemäße Verfahren, wenn die Ionenaustauscher der vorkonditionierten Ionenaustauscherharz-Suspensionen eine gelförmige oder makroporöse Struktur aufweisen.

Vorteilhaft ist das erfindungsgemäße Verfahren, wenn die in der vorkonditionierten Ionenaustauscherharz-Suspension enthaltene flüssige Phase bei Überführung aus dem Lager- oder Transportbehälter in den Reaktor teilweise im Kreislauf von Lager- oder Transportbehälter (1) über die Leitung (3) und teilweise durch Leitung (4) wieder in den Lager- oder Transportbehälter (1) zurückgeführt wird.

Vorteilhaft ist das erfindungsgemäße Verfahren, wobei der vorkonditionierte Ionenaustauscher in Phenol gelagert wird und der Phenolanteil bezogen auf die Gesamtmasse der Ionenaustauscher/Phenol-Suspension 20 bis 80 Gew.-% beträgt. Der Anteil von flüssiger und fester Phase in der Ionenaustauscher/Phenol-Suspension kann sich während der Förderprozesse verändern.

Vorteilhaft ist das erfindungsgemäße Verfahren, wobei das Ionenaustauscherharz in der vorkonditionierten Ionenaustauscherharz-Suspension ein kationisches Ionenaustauscherharz ist.

Die vorkonditionierte Ionenaustauscherharz-Suspension als Endprodukt der Katalysator-Vorbehandlung und -Konditionierung wird aus der Anlage zur Katalysator-Vorbehandlung mit einem Sauerstoffanteil in der Gasphase von weniger als 500 Vol-ppm als Ionenaustauscherharz-Suspension in einer pumpfähigen Form in einen Lager- oder Transportbehälter überführt. Geeignete Lager- oder Transportbehälter sind solche, die es ermöglichen, dass die Ionenaustauscherharz-Suspension bei Entnahme in einer pumpfähigen Form vorliegt, bevorzugt sind es beheizbare Lagerbehälter oder Transportbehälter, die aus geeignetem Edelstahl oder anderen unter Lagerbedingungen der Suspension korrosionsbeständigen Materialien bestehen oder korrosionsbeständig ausgerüstet sind. Geeignete Werksoffe für die Lager- oder Transportbehälter sind z.B. Edelstähle der Typen 1.4571, 1.4404 oder andere, emaillierte Behälter, keramische oder glasartige Behälter oder kunststoffhaltige Behälter, die gegenüber organischen oder anorganischen Säuren oder Basen, Wasser oder Luftsauerstoff beständig sind. Geeignete Lager- oder Transportbehälter sind z.B. beheizbare Bahnkesselwagen, Übersee-Container oder Straßen-Tankwagen. Als Behältermaterial wird vorzugsweise Edelstahl verwendet, der unter den Lager-und Transportbedingungen der Suspension korrosionsbeständig ist.

Geeignete Behälter besitzen bevorzugt mit Inertgas überlagerte Belüftungs- bzw. Entspannungs-Vorrichtungen.
Die bevorzugte Lagertemperatur ist < 60 °C, besonders bevorzugt < 40 °C.
Die Lagerzeit beträgt bevorzugt weniger als 12 Monate, besonders bevorzugt weniger als 6 Monate ganz besonders bevorzugt weniger als 3 Monate. Bei einer Lagerung von mehr als 12 Monaten kann je nach Ionenaustauscher ein zusätzlicher Arbeitsschritt erforderlich sein, um während der Lagerzeit möglicherweise gebildete eluierbare Säuremengen aus dem Ionenaustauscher zu entfernen.
Unter Ionenaustauscherharz-Suspensionen in pumpfähiger Form sind solche Ionenaustauscherharz-Suspension zu verstehen, die für die Überführung mit Hilfe einer Pumpe im Lager- oder Transportbehälter eine Temperatur aufweisen, die im Bereich von 50 bis 90 °C, bevorzugt 60 bis 80 °C und vorzugsweise einen Feststoffanteil von 20 bis 80 Gew.-%, bevorzugt 30 bis 70 Gew.-% aufweisen.

Die vorkonditionierte Ionenaustauscherharz-Suspension kann in dem Lager- oder Transportbehälter während der Lagerung oder des Transportes mit weniger als 500 Vol.-ppm Sauerstoff in flüssiger, erstarrt oder teilerstarrt Form vorliegen.

Die vorkonditionierte Ionenaustauscherharz-Suspension wird, nach Ablauf der Lagerzeit oder Beendung des Transportes vom Lager- oder Transportbehälter in einen Reaktor überführt, wobei die vorkonditionierte Ionenaustauscherharz-Suspension, sollte sie nicht in pumpfähiger, sondern in erstarrter oder teilerstarrter Form vorliegen, vorsichtig aufgeschmolzen wird und anschließend die so in pumpfähiger Form vorliegende vorkonditionierte Ionenaustauscherharz-Suspension in den Reaktor mit weniger als 500 Vol.-ppm Sauerstoff in der Gasphase mit geeigneten Pumpen vom Lager- oder Transportbehälter in den Reaktor überführt wird. Die zur Überführung verwendeten Pumpen, sind solche die die Ionenaustauscherharz-Suspension nicht schädigen, bevorzugt sind es solche bei denen die Förderung scherarm, abriebsarm und somit schonend für das Ionenaustauscherharz der Ionenaustauscherharz-Suspension erfolgt, besonders bevorzugt sind Membranpumpen. Der Energie-Eintrag beim Fördern der Ionenaustauscherharz-Suspensionen sollte bevorzugt 150 W/m³ nicht übersteigen, bevorzugt liegt er im Bereich von 20 bis 130 W/m³. Zur Überführung vom Lager- oder Transportbehälter in den Reaktor werden Rohre oder geignete flexible Verbindungen eingesetzt, die korrosionsstabile sind und die die Temperaturen, die im Bereich von 50 bis 90 °C liegen unverändert überstehen. Bevorzugt sind dies Rohre oder flexible Verbindungen aus geeignete Werkstoffen z.B. Edelstählen der Typen 1.4571, 1.4404 oder anderen oder Stahlflexschläuchen oder Panzerschläuchen.

Es wurde überraschend gefunden, dass nach dem erfindungsgemäßen Verfahren vorkonditionierte Ionenaustauscherharz-Suspensionen in geeigneten Flüssigkeiten gelagert und transportiert werden können, ohne durch die Transport bedingte mechanische Beanspruchung durch Pumpen und Erstarren sowie Aufschmelzen der Suspension geschädigt zu werden. Mit den gängigen analytischen Verfahren wie beispielsweise optische Methoden zur Bestimmung des Partikelbruches, Mikroskopie und Partikelgrößenmessungen konnte gezeigt werden, dass das erfindungsgemäße Verfahren, das auch das Erstarren, Teilerstarren und Aufschmelzen der Ionenaustauscherharz-Suspension umfasst, zu keiner messbaren mechanischen Schädigung des vorkonditionierten Ionenaustauschers führt. Vorkonditionierte Ionenaustauscherharz-Suspensionen können als flüssige Phasen alle diejenigen Lösungsmittel verwenden, die während der eigentlichen Katalyse nicht schädlich für die Reaktion sind bzw. zu keinen überflüssigen Nebenprodukten führen. Besonderns bevorzugt sind alle Lösungsmittel, die in herkömmlichen Polykonendationsreaktionen eingesetzt werden können. Vorkonditionierte Ionenaustauscherhharz-Suspensionen, die anschließend als Katalysator für die Bisphenol Herstellung eingesetzt werden sollen, können als flüssige Phasen in der Ionenaustauscherharz-Suspensionen OH-haltige flüssige Phasen wie Wasser sowie organische Lösungsmittel wie Phenol oder Mischungen aus diesen flüssigen Phasen enthalten. Bevorzugt ist Phenol als flüssige Phase für die vorkonsitionierten Ionenaustauscherharz-Suspensionen, die zur Herstellung von Bisphenol A eingesetzt werden sollen. Eine bevorzugte Ausführungsform des erfindungsgemäßen Verfahrens ist die Lagerung oder der Transport von vorkonditioniertem Ionenaustauscherharz-Suspensionen, die für die Bisphenol A Herstellung aus Aceton und Phenol eingesetzt werden sollen. Diese vorkonditionierten Ionenaustauscherharz-Suspensionenen enthalten bevorzugt eine OH-haltige flüssige Phase, besonders bevorzugt Phenol als flüssige Phase in der Ionenaustauscherharz-Suspension.

Der auf diesem Wege konditionierte Ionentauscher ist hervorragend zur Herstellung von Bisphenolen, insbesondere zur Herstellung von Bisphenol A (BPA) aus Aceton und Phenol geeignet. Das mit diesem Ionentauscher hergestellte BPA weist hohe Produktqualitäten auf und ist in besonderer Weise zur Herstellung von Polymeren wie Epoxyharzen und insbesondere Polycarbonat geeignet. Verwendet werden die so hergestellten Polycarbonate zur Herstellung von Formkörpern wie insbesondere Compact Disks, Linsen und Scheiben.

Nachfolgend wird das erfindungsgemäße Verfahren anhand der beigefügten Zeichnung näher erläutert.

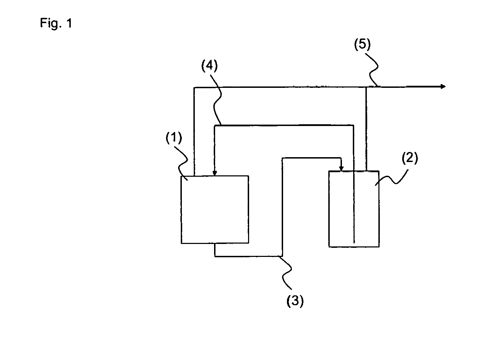

Die Umfüllung der vorkonditionierten Ionenaustauscherharz-Suspension ist in Fig.1 dargestellt. In Fig. 1 steht (1) für einen Lager- oder Transportbehälter, der beheizt werden kann, (2) für einen Behälter, der gerührt und beheizt werden kann, (3) für eine Leitung über die die Ionenaustauscherharz-Suspension in den Behälter (2) gefördert wird, (4) für eine Leitung, die die flüssige Phase der Ionenaustauscherharz-Suspension umleitet und (5) für eine Anbindung an eine Ablufteinrichtung. Für die Umfüllung der Ionenaustauscherharz-Suspension aus dem Lager- oder Transportbehälter in den Behälter (2) wird die Ionenaustauscherharz-Suspension mittels geeigneter Fördereinrichtungen über Leitung (3) von dem Lager- oder Transportbehälter (1) in Behälter (2) gefördert. Geeignete Fördereinrichtungen sind z.B. Membranpumpen. Dadurch wird das Gasvolumen des vorzugsweise inertisierten Behälters (2) über Leitung (5) verdrängt. Überschüssige flüssige Phase der Ionenaustauscherharz-Suspension wird über Leitung (4), die mit einer Filtrationseinrichtung versehen ist, um den in der Suspension enthaltenen Ionenaustauscher zurückzuhalten, mittels geeigneter Fördereinrichtungen zurück in den Lager- oder Transportbehälter (1) gefördert. Es ist weiterhin bei Bedarf möglich, zusätzliches Phenol (Frischphenol) in den Lager- oder Transportbehälter (1), in Behälter (2) oder die Leitungen (3) oder (4) in das System zu fördern oder überschüssiges Phenol aus dem System zu entfernen. Das Ende der so resultierenden Kreislaufförderung wird z.B. optisch oder mit Hilfe geeigneter Messeinrichtungen bestimmt. Geeignete Messeinrichtungen sind dem Fachmann bekannte Messmethoden zur Füllstandsbestimmung oder Stoffstromförderung. Alle Leitungen sind vorzugsweise begleitbeheizt ausgeführt und mit Sicherungseinrichtungen gegen Überdruck ausgerüstet.

Ein weiterer Vorteil des beschriebenen Verfahrens besteht daher darin, dass durch das erfindungsgemäße Verfahren zum Umfüllen und anschließendem schädigungsfreien Transportes der vorkonditionierten Ionenaustauscherharz-Suspension die Auslastung einer entsprechenden von der dem eigentlichen Katalysierungsreaktor unabhängige Vorkonditionierungsanlage durch den Versand der vorkonditionierten Ionenaustauscherharz-Suspension deutlich erhöht werden kann. Hierdurch entstehen zum einen wirtschaftliche Vorteile bei dem Betrieb der Vorkonditionierungsanlage und zum anderen werden Ressourcen geschont, da nicht jede einzelne Produktionsanlage mit einer Vorkonditionierungsanlage ausgerüstet werden muss, um den Vorteil der kurzen Ausfallzeit eines Katalysatorreaktors während der Vorkonditionierung zu nutzen.

Es wurde weiterhin gefunden, dass beispielsweise für die Bisphenol A Herstellung das Phenol aus der vorkonditionierten Ionenaustauscherharz-Suspension nach Transport, Erstarren und wieder Aufschmelzen gemäß dem erfindungsgemäßen Verfahren mit sauren löslichen Anteilen aus dem Ionenaustauscher kontaminiert sein kann. Die Menge an säurehaltigen eluierbaren Anteilen in dem so anfallenden Phenol steigt mit der zwischen Konditionierung und Einsatz in einem Reaktionsbehälter verstrichenen Zeit. Zur beliebigen Weiterverwendung, insbesondere als Ausgangsstoff zur Herstellung von BPA, wird deshalb das so anfallende Phenol vorzugsweise durch Destillation gereinigt, wobei der Sumpf der Kolonne mit bis zu 5 Gew.-% einer basischen Verbindung beschickt werden kann, die geeignet ist, saure Bestandteile zurückzuhalten. Eine bevorzugte basische Verbindungen ist Natriumhydroxid.

Um geringe Mengen an sauren löslichen Anteilen, die sich möglicherweise in der zwischen Konditionierung und Einsatz in einem Reaktionsbehälter verstrichenen Zeit in dem Ionenaustauscher gebildet haben können, wirksam aus dem aus dem Ionenaustauscher zu entfernen, ist es möglich, den konditionierten Ionenaustauscher mit Phenol bei 50 bis 90 °C, bevorzugt bei 60 bis 80 °C zu waschen. Diese Wäsche wird im Reaktor der Katalyse vorgenommen. Als wirksame Phenolmengen zur Entfernung geringer Mengen an sauren löslichen Anteilen haben sich 1 bis 2 Bettvolumina des konditionierten Ionenaustauschers erwiesen.

Das erfindungsgemäße Verfahren zu Förderung, Lagerung und Transport von Ionenaustauscherharz-Suspensionen eignet sich auch für die Förderung, Lagerung und Transport anderer formstabiler hetererogener Katalysatoren, die z.B. für Kondensationsreaktionen eingesetzt werden können.

Das erfindungsgemäße Verfahren vermeidet nicht nur die oben beschriebenen Nachteile der bekannten stationären Katalysator-Konditionierungen, sondern ermöglicht gleichzeitig den optimalen Einsatz der vorkonditionierten Ionenaustauscherharz-Suspensionen als Katalysatorharze bei Kondensationsreaktionen, bevorzugt bei Kondensationsreaktionen ausgehend von Phenolen, o-, m-, p-Kresolen oder α- oder β-Naphtholen, insbesondere bevorzugt bei der Synthese von Bisphenolen, ganz besonders bevorzugt zur Synthese von BPA aus Phenol und Aceton. Die vorkonditionierten Ionenaustauscherharz-Suspensionen eignen sich aber auch hervorragend zum Einsatz als Katalysatoren bei Additionsreaktionen. Beispielsweise sei als Additionsreaktion die Addition von Alkoholen an Alkene genannt, bevorzugt von Alkoholen an C₁-C₄-Alkene, insbesondere bevorzugt von Methanol, Ethanol, Propanol oder Butanol an Isobuten, ganz besonders bevorzugt von Methanol an Isobuten zu Methyl-*tert.*-butylether.

Die vorkonditionierten Ionenaustauscherharz-Suspensionen eignen sich zudem zur Katalyse von Veresterungen durch Reaktion von Alkoholen mit Carbonsäuren, bevorzugt von C₁-C₈-Alkoholen mit C₁-C₈-Carbonsäuren, besonders bevorzugt zur Veresterung von Methanol, Ethanol, Propanol und allen Isomeren des Butanols mit Carbonsäuren der Reihe Ameisensäure, Essigsäure, Propionsäure oder Buttersäure.

Außerdem eignen sich die vorkonditionierten Ionenaustauscherharz-Suspensionen zur Katalyse von Umesterungsreaktionen, beispielsweise von Triestern zu Monoestem, insbesondere die Umesterung eines Triglycerids mit Methanol, Ethanol, Propanol oder Butanol zu einem Fettsäuremonoester.

Schließlich eignen sich die konditionierten Ionenaustauscherharz-Suspension zur Katalyse von Alkylierungsreaktionen, beispielsweise die Alkylierung von Phenolen oder Kresolen mit linearen oder verzweigten Olefinen beispielsweise zu Triisobuten oder Nonen.

Das nachfolgende Beispiel dient zur Erläuterung der Erfindung. Die Erfindung ist nicht auf das Beispiel limitiert.

### Beispiele

### Beispiel 1

Kommerziell erhältlicher sulfonsaurer auf quervernetztem Polystyrol basierender Ionentauscher (Lewatit^{®} K 1221, der Firma Lanxess) wird zunächst mit VE-Wasser gewaschen, um freie Säureanteile aus dem Katalysator zu entfernen und anschließend durch Wäsche mit Phenol entwässert:

Die Wasserwäsche (Sauerstoffgehalt im VE-Wasser <20 ppb) erfolgt in einem zeitweise gerührten Konditionierungsbehälter unter Stickstoffatmosphäre in 12 Zyklen bei 30 °C, die Restleitfähigkeit des Waschwassers am Ablauf beträgt beim letzten Zyklus 14 mikroSiemens/cm. Die Entwässerung erfolgt kontinuierlich unter Stickstoffatmosphäre bei 70 °C mit Phenol. Hierbei verringert sich das Volumen des Ionentauschers um ca. 48 %. Das am Ablauf anfallende wasserhaltige Phenol wird durch Destillation bei anfänglich 700 mbar und 105 °C Sumpftemperatur abdestilliert. Zum Ende der Destillation wird das Vakuum auf 130 mbar abgesenkt; die Sumpftemperatur steigt auf 125 °C. Auf diese Weise wird pro Stunde in ansteigender Menge 1 bis 10 % der gesamt vorhandenen Flüssigkeitsmenge im Rührbehälter über die Destillationskolonne geführt. Phenol wird als Sumpfprodukt in den Entwässerungsbehälter zurückgeführt. Das Kopfprodukt der Kolonne (8 % Phenol, 92 % Wasser) wird einer kontinuierlichen Extraktionsanlage zugeführt. Auf diese Weise ausgeschleustes Phenol wird kontinuierlich durch Frischphenol ergänzt. Die kontinuierliche Entwässerung wird beendet, wenn am Ablauf ein Wassergehalt von 2,5 Gew.% Restwasser in Phenol erreicht wird. Der Ionentauscher wird bei 70 °C als Suspension in Phenol (Feststoffanteil 40 Vol.-%) durch Förderung mit Membranpumpen über Rohrleitungen und flexible Verbindungen in geeignete teilbeheizbare Transportbehälter überführt. Überstehendes Phenol wird abgelassen und durch Destillation bei 120 °C und 150 mbar über Natriumhydroxyd (0,001 Gew.-%) gereinigt. Die so vorkonditionierte Ionentauscherharz-Suspension wird mittels konventioneller Transportwege auf Schiene und Wasser zur gewünschten Produktionsstelle transportiert. Die Gesamttransportzeit beträgt ca. 6 Wochen. Die erstarrte Ionenaustauscherharz-Suspension wird für die Überführung in den Produktionsbehälter (Reaktor) aufgeschmolzen. Hierzu wird der teilbeheizbare Transport-Behälter mit auf 75 °C temperiertem Wasser und Niederdruckdampf mit einer Temperatur von 110°C beheizt. Dabei wird beachtet, dass die Temperatur in dem teilbeheizbaren Bahnkesselwagen an keiner Stelle über 75 °C steigt. Nach dem Aufschmelzen wird die Suspension mittels Membranpumpen und Zugabe von Phenol, das auf 70 °C temperiert wurde, aus dem Transportbehälter in den Reaktor gepumpt und zur kontinuierlichen Produktion von 2,2-Bis(4-hydroxyphenyl)propan genutzt. Das für die Umpumpvorgänge verwendete Phenol wird durch Destillation bei 120 °C und 150 mbar über Natriumhydroxyd (0,001 Gew.-%) gereinigt und im Prozess wiederverwendet.

## Patentansprüche

1. Verfahren zur Aufbewahrung oder Transport von vorbehandelten, konditionierten Ionenaustauschern als Katalysatoren für chemische Reaktionen, wobei das vorkonditionierte Ionenaustauscherharz als vorkonditionierte Ionenaustauscherharz-Suspension in einem Lager- oder Transportbehälter vorliegt und entweder zu einem Lagerplatz transportiert und dort zwischengelagert oder zu einem zu befüllenden Reaktor transportiert und in diesen überführt wird.

2. Verfahren nach Anspruch 1, wobei der Lager- oder Transportbehälter beheizbar ist.

3. Verfahren nach einem der Ansprüche 1 bis 2, wobei die Ionenaustauscherharz-Suspension in Gegenwart von weniger als 500 Vol-ppm Sauerstoff in der Gasphase mit einem Feststoffanteil von 20 bis 80 Vol.% bezogen auf die Ionenaustauscherharz-Suspension im Lager- oder Transportbehälter vorliegt.

4. Verfahren nach Anspruch 3, wobei die im beheizbarem Transportbehälter in flüssiger oder erstarrter oder teilerstarrter Form vorliegende vorkonditionierte Ionenaustauscherharz-Suspension in eine pumpfähige Ionenaustauscherharz-Suspension, falls die Suspension erstarrt oder teilerstarrt ist, durch schonendes Aufschmelzen, mit weniger als 500Vol-ppm Sauerstoff, überführt wird, mit geeigneten Pumpen, die den Ionenaustauscher nicht schädigen, den Transportbehälter entnommen und über geeignete Rohrleitungen oder geeignete flexible Verbindungen in einen Reaktor bei Temperaturen von 50 bis 80 °C und mit einem Feststoffanteil von 20 bis 80 Vol.-% mit weniger als 500 Vol-ppm Sauerstoff überführt wird.

5. Verfahren nach einem der Ansprüche 3 bis 4, wobei die flüssige Phase der vorkonditionierten Ionenaustauscherharz-Suspension eine OH-Komponente ist.

6. Verfahren nach Anspruch 5, wobei die OH-Komponente Phenol ist.

7. Verfahren nach Anspruch 6, wobei das Phenol ein Restwassergehalt, im Bereich von 0,1 - 10% bezogen auf Phenol, enthält

8. Verfahren nach einem der Ansprüche 3 bis 7, wobei die Ionenaustauscher der vorkonditionierten Ionenaustauscherharz-Suspensionen eine gelförmige oder makroporöse Struktur aufweisen.

9. Verfahren nach Anspruch 4, wobei die in der vorkonditionierten Ionenaustauscherharz-Suspension enthaltene flüssige Phase bei Überführung aus dem Lager- oder Transportbehälter in den Reaktor teilweise im Kreislauf von Lager- oder Transportbehälter (1) über die Leitung (3) und teilweise durch Leitung (4) wieder in den Lager- oder Transportbehälter (1) zurückgeführt wird.

10. Verfahren nach einem der Ansprüche 3 bis 9, wobei der vorkonditionierte Ionenaustauscher in Phenol gelagert wird und der Phenolanteil bezogen auf die Gesamtmasse der Ionenaustauscher/Phenol-Suspension 20 bis 80 Gew.-% beträgt.

11. Verfahren nach einem der Ansprüche 3 bis 10, wobei das Ionenaustauscherharz in der vorkonditionierten Ionenaustauscherharz-Suspension ein kationisches Ionenaustauscherharz ist.
